(19) Europäisches Patentamt
European Patent Office
Office européen des brevets

(11) Veröffentlichungsnummer: **0 471 925 B1**

(12) **EUROPÄISCHE PATENTSCHRIFT**

(45) Veröffentlichungstag der Patentschrift: **30.11.94**

(51) Int. Cl.5: **C08L 95/00**

(21) Anmeldenummer: **91108009.1**

(22) Anmeldetag: **17.05.91**

(54) **Verfahren zur Wiederverwendung von Polymere und Füllstoffe enthaltenden Reststoffen.**

(30) Priorität: **23.08.90 DE 4026623**

(43) Veröffentlichungstag der Anmeldung:
**26.02.92 Patentblatt 92/09**

(45) Bekanntmachung des Hinweises auf die
Patenterteilung:
**30.11.94 Patentblatt 94/48**

(84) Benannte Vertragsstaaten:
**AT BE CH DE DK ES FR GB GR IT LI LU NL SE**

(56) Entgegenhaltungen:
**FR-A- 2 157 586**
**FR-A- 2 462 459**
**US-A- 4 485 201**

**WORLD PATENTS INDEX LATEST Week 8316,**
**12. März 1983 Derwent Publications**
**Ltd.,London, GB; AN 83:38149K**

**WORLD PATENTS INDEX LATEST Week 8523,**
**Derwent Publications Ltd., London, GB;**
**AN85139706**

(73) Patentinhaber: **RÜTGERSWERKE AKTIENGE-**
**SELLSCHAFT**
**Mainzer Landstrasse 217**
**D-60326 Frankfurt (DE)**

(72) Erfinder: **Eckert, Armin**
**Mittelkamp 41**
**W-4355 Waltrop (DE)**
Erfinder: **Bildner, Karlheinz**
**Zimmerplatzstrasse 5**
**W-6464 Linsengericht 4 (DE)**
Erfinder: **Scherp, Ernst**
**Erlenweg 5**
**W-6454 Bruchköbel (DE)**

**Beschreibung**

Die Erfindung betrifft ein Verfahren zur Wiederverwendung von Polymere und Füllstoffe enthaltenden Reststoffen.

Es ist bekannt, auch Polymere und Füllstoffe enthaltende thermoplastische Reststoffe sortenrein zu sammeln und zerkleinert oder aufgeschmolzen und in den Formgebungsprozeß zurückzuführen. Neben der geforderten Sortenreinheit, darf der Polymeranteil sich weder in seiner Struktur noch in seinem Verhalten verändert haben.

Polymerreststoffe mit sehr hohem Feststoffgehalt oder mit einem Anteil an vernetzten oder ausgehärteten Polymeren können nicht in den jeweiligen Formgebungsprozeß zurückgeführt werden. Sie lassen sich nur verbrennen oder pyrolysieren. Während der Polymeranteil der Erzeugung von Wärme dient oder als Öl wiedergewonnen wird, bleiben die anorganischen Füllstoffe zurück und müssen entsorgt werden. Dies kann problematisch sein, wenn die Abfälle metallische Füllstoffe und Pigmente enthalten.

Ein Beispiel für solche Abfälle ist der bei der Herstellung von Bremsbelägen anfallende Staub. Auch wenn er frei von Asbest ist, enthält er neben anderen Füllstoffen Metallfasern und -pulver z. B. aus Bronze, Messing und Eisen. Wegen der beschriebenen Probleme werden diese Reststoffe heute üblicherweise direkt als Sondermüll deponiert. In der Bundesrepublik Deutschland allein sind dies jährlich etwa 10.000 t.

Es bestand daher die Aufgabe, für nicht direkt wiederverwendbare, nur als Sondermüll deponierbare Polymere und Füllstoffe enthaltende Problemreststoffe ein geeignetes Verfahren zur Wiederverwendung zu finden.

Die Aufgabe wird dadurch gelöst, daß Polymere und Füllstoffe enthaltende Reststoffe, die mindestens zu 80 Gew.-% eine Korngröße von nicht mehr als 0,1 mm haben, als Füller mit Bitumen und ggf. weiteren Zusatzstoffen bei einer Temperatur von 120 bis 200 °C intensiv gemischt werden, wobei das Verhältnis Bitumen zu Reststoff 10 : 1 bis 1 : 1 beträgt.

Die weiteren Zusatzstoffe können mineralische Füllstoffe, Plastifizierungsmittel, Oxidationsinhibitoren, Elastomere, Thermoplaste und ähnliches sein, je nach Verwendungsgebiet des nach der Erfindung hergestellten Produkts. Wenn die Reststoffe grobe Partikel aufweisen, müssen sie vor der Verwendung gemahlen werden.

Niedrigere Reststoffanteile im Gemisch sind zwar möglich, aber es tritt keine deutliche Verbesserung der Plastizitätsspanne auf. Höhere Reststoffgehalte lassen sich wegen des Thixotropie-Effekts kaum noch verarbeiten.

Bei niedrigem Bitumen/Reststoff-Verhältnis ist es häufig vorteilhaft, zunächst den staubförmigen Reststoff mit dem Bitumen zu vermischen, bevor die weiteren Zusatzstoffe hinzugefügt werden. Es wurde festgestellt, daß bei Bautenschutzmitteln, wie Spachtelmassen, Kitten, und Fugenvergußmassen, bei Rohrschutzmassen, Deckmassen für bituminöse Dichtungsbahnen und Straßenbaubindemitteln der übliche Filleranteil vollständig durch die staubförmigen Reststoffe ersetzt werden kann, ohne daß eine Qualitätseinbuße hinzunehmen ist. Es wurde sogar eine Erweiterung des Plastizitätsbereiches festgestellt, insbesondere wenn die Reststoffe Fasern und noch nicht ausgehärtete oder vernetzte Polymere enthielten.

Da die staubförmigen Reststoffe vollständig vom Bitumen umhüllt werden, besteht keine Gefahr, daß eventuell schädliche Stoffe ausgewaschen werden und ins Grundwasser gelangen können.

Je nach Verwendung kann es auch sinnvoll sein, die Reststoffe vor dem Vermischen mit Bitumen thermisch zu behandeln. Eine Temperatur von 180 bis 240 °C ist dabei im allgemeinen ausreichend. Die bituminösen Mischungen eignen sich auch zur Herstellung von Entdröhnungsfolien.

Die Erfindung wird anhand der nachfolgenden Beispiele näher erläutert.

**Beispiele**

Beispiel 1

Bitumen B 200 wird mit unterschiedlichen Mengen eines staubförmigen Reststoffes aus der Reibbelagfertigung mit einer Korngröße von 80 Gew.-% kleiner 0,1 mm und der in der Tabelle 1 angegebenen Zusammensetzung vermischt. Als Vergleich dazu werden im gleichen Verhältnis Bitumen/Schiefermehl-Mischungen hergestellt. Es werden die Erweichungspunkte (Ring und Kugel) und der Brechpunkt nach Fraaß (DIN 52 012) gemessen. Aus der Differenz wird die Plastizitätsspanne errechnet.

Die Ergebnisse sind in der Tabelle 2 gegenübergestellt.

Tabelle 1

Zusammensetzung des Reststoffes

2 Gew.-% ausgehärtetes Phenolharz
2 Gew.-% Novolak
12 Gew.-% Kautschuk
6 Gew.-% Steinwolle
1 Gew.-% Glasfaser
3 Gew.-% Messingspäne
8 Gew.-% Graphit
19 Gew.-% Stahlwolle
47 Gew.-% sonstige Füllstoffe

## Tabelle 2

| Versuch Nr. | Bitumen Gew.-% | Abfall- staub Gew.-% | Schiefer- mehl Gew.-% | Erweichungs- punkt °C | Brech- punkt °C | Plastizi- tätsspanne °C |
|---|---|---|---|---|---|---|
| 1 | 90 | 10 | --- | 41 | - 5,0 | 46 |
| 2 | 90 | --- | 10 | 40 | - 4,0 | 44 |
| 3 | 80 | 20 | --- | 43 | - 6,5 | 49,5 |
| 4 | 80 | --- | 20 | 41 | - 4,5 | 45,5 |
| 5 | 70 | 30 | --- | 47 | - 8,0 | 55,0 |
| 6 | 70 | --- | 30 | 43 | - 6,0 | 49,0 |
| 7 | 60 | 40 | --- | 51 | - 8,5 | 59,5 |
| 8 | 60 | --- | 40 | 44 | - 6,0 | 50,0 |
| 9 | 50 | 50 | --- | 82 | - 10,0 | 92,0 |
| 10 | 50 | --- | 50 | 47 | - 6,5 | 53,5 |

EP 0 471 925 B1

EP 0 471 925 B1

## Diagramm

**Plastizitäts-spanne °C** (y-axis: 40, 50, 60, 70, 80, 90, 100)

**Füllstoffzusatz Gew.-%** (x-axis: 10, 20, 30, 40, 50)

Füllstoff
+ Reststoff-Staub
. Schiefermehl

Das Diagramm zeigt deutlich die stärkere Zunahme der Plastizitätsspanne bei der Zugabe des Reststoff-Staubes aus der Reibbelagfertigung gegenüber der Zugabe von Schiefermehl. Das Gemisch des Versuchs 9 ist beispielsweise direkt als Rohrschutzmasse (Typ A) einsetzbar, wo seine Zähigkeit ebenso wie bei Spachtelmassen sehr vorteilhaft ist.

Beispiel 2

Außer der Verwendung in bituminösen Bautenschutzmittel wurde die Verwendung des Reststoff-Staubes im Akustikbereich untersucht. Dabei wurde ein Teil des Schiefermehls durch den Reststoff-Staub entsprechend dem Beispiel 1 ersetzt.

5

Die bituminöse Masse aus
36 Gew.-% eines Bitumengemisches,
1 Gew.-% Polypropylen,
3,9 Gew.-% Glimmer,
20 Gew.-% Glashohlkugeln,
29,1 Gew.-% Schiefermehl und
10 Gew.-% Reststoff-Staub
wird zu Folien mit einem Flächengewicht von 2,85 kg m$^{-2}$ gegossen, die oberseitig mit einer Antiblockbeschichtung (40 g m$^{-2}$) und unterseitig mit einer Versiegelung (40 g m$^{-2}$) versehen werden. Die Entdröhnungsfolien werden mit der Unterseite auf ein Stahlblech aufgeschmolzen. Die Folien zeigen gegenüber denen mit 39,1 Gew.-% Schiefermehl ohne Reststoff-Staub um ein 10 °C verbessertes Wärmestandsvermögen (kein Abrutschen innerhalb von 30 min bei 170 °C statt bei 160 °C) bei sonst gleichen akustischen Eigenschaften.

**Patentansprüche**

1. Verfahren zur Wiederverwendung von Polymere und Füllstoffe enthaltenden Reststoffen, **dadurch gekennzeichnet**, daß die Reststoffe, die mindestens zu 80 Gew.-% eine Korngröße von nicht mehr als 0,1 mm haben, als Füller mit Bitumen und ggf. weiteren Zusatzstoffen bei einer Temperatur von 120 bis 200 °C intensiv gemischt werden, wobei das Verhältnis Bitumen zu Reststoff 10 : 1 bis 1 : 1 beträgt.

2. Verfahren nach Anspruch 1, **dadurch gekennzeichnet**, daß der Reststoff aufgemahlen ist.

3. Verfahren nach Anspruch 1, **dadurch gekennzeichnet**, daß das Bitumen zunächst mit den Reststoff vermischt wird, bevor weitere Zusatzstoffe hinzugefügt werden.

4. Verwendung der bituminösen Mischung nach Anspruch 1 als Bautenschutzmittel.

5. Verwendung der bituminösen Mischung nach Anspruch 1 zur Herstellung von Entdröhnungsfolien.

**Claims**

1. A method for reusing residues containing polymers and fillers, characterised in that the residues, of which at least up to 80 % by weight has a grain size not exceeding 0,1 mm, are intensively mixed as fillers with bitumen and optionally further additives at a temperature of 120 to 200 oC, the ratio of bitumen to residue being 10 : 1 to 1 : 1.

2. A method according to claim 1, characterised in that the residue is ground.

3. A method according to claim 1, characterised in that the bitumen is first mixed with the residue, before further additives are added.

4. Use of the bituminous mixture according to claim 1 as a building proofing material.

5. Use of the bituminous mixture according to claim 1 for manufacturing soundproofing sheets.

**Revendications**

1. Procédé de réutilisation de résidus contenant des polymères et des charges, caractérisé en ce que les résidus en tant que matière de remplissage qui possèdent, à raison d'au moins 80 % en poids, une granulométrie non supérieure à 0,1 mm, sont énergiquement mélangés à une température de 120 à 200 °C avec du bitume et, le cas échéant avec d'autres additifs, le rapport de bitume au résidu s'étendant de 10:1 à 1 : 1.

2. Procédé selon la revendication 1, caractérisé en ce que le résidu est broyé.

3. Procédé selon la revendication 1, caractérisé en ce que le bitume est tout d'abord mélangé avec le résidu avant l'addition d'autres additifs.

4. Utilisation du mélange bitumineux selon la revendication 1 en tant qu'agent protecteur pour le bâtiment.

5. Utilisation du mélange bitumineux selon la revendication 1 pour la fabrication de feuilles insonorisantes.